# EUROPÄISCHE PATENTSCHRIFT

(11) **EP 3 065 564 B1**
(45) Veröffentlichungstag und Bekanntmachung des Hinweises auf die Patenterteilung: **16.10.2019**
(21) Anmeldenummer: 14792432.8
(22) Anmeldetag: 20.10.2014
(51) Int. Cl.: A23L 13/40, A23L 13/70, A23B 4/02, A23B 4/32

(54) **VERFAHREN UND VERWENDUNG EINER VORRICHTUNG ZUM EINBRINGEN VON SALZ IN LEBENSMITTEL**
METHOD AND USE OF A DEVICE FOR INTRODUCING SALT INTO FOOD
PROCÉDÉ ET UTILISATION D'UN DISPOSITIF SERVANT À INTRODUIRE DU SEL DANS DES ALIMENTS

(30) Priorität: 18.10.2013 DE 102013221237
(43) Veröffentlichungstag der Anmeldung: 14.09.2016
(73) Patentinhaber: Deutsches Institut für Lebensmitteltechnik e.V., 49610 Quakenbrück (DE)
(72) Erfinder: HUKELMANN, Bernhard, 49610 Quakenbrück (DE)
(74) Vertreter: Taruttis, Stefan Georg
(86) Internationale Anmeldenummer: PCT/EP2014/072469
(87) Internationale Veröffentlichungsnummer: WO 2015/055860

(56) Entgegenhaltungen:
- DE-T2- 69 935 244
- US-A- 3 436 230
- US-A- 5 275 095
- US-A1- 2004 121 063
- US-A1- 2004 149 146

## Beschreibung

Die vorliegende Erfindung betrifft ein Verfahren und eine für das Verfahren eingerichtete Vorrichtung zum Einbringen von Lebensmittelzusatzstoffen, die optional wasserlöslich sein können und die insbesondere Salz, Würzmittel und Konservierungsmittel umfassen können, in feste Lebensmittel, insbesondere in rohes oder gekochtes Fleisch. Die erfindungsgemäße Vorrichtung und das damit durchführbare Verfahren zeichnen sich dadurch aus, dass damit zumindest ein Feststoff, der optional zumindest anteilig, bevorzugt vollständig wasserlösliche Lebensmittelzusatzstoffe aufweist oder daraus besteht, in feste Lebensmittel eingebracht werden. Der Feststoff kann aus einem oder mehreren Lebensmittelzusatzstoffen bestehen, insbesondere festem Salz, wahlweise in Mischung mit weiteren Lebensmittelzusatzstoffen, beispielsweise Gewürz, Konservierungsmittel. Die Vorrichtung und das Verfahren haben den Vorteil, dass damit die Lebensmittelzusatzstoffe, insbesondere Salz, ohne den Eintrag von Lösungswasser in das Lebensmittel eingebracht werden können.

### Stand der Technik

Die US 3,436,230 beschreibt die Injektion von Flüssigkeiten in Fleisch mittels Düsen.

Die US 5,275,095 beschreibt das Injizieren einer Flüssigkeit mittels einer Vielzahl angetriebener Injektionsnadeln in Fleisch.

Die US 2004/0121063 A1 beschreibt Mischungen aus Lebensmittelzusatzstoffen, die immer mittels eines Bindemittels, insbesondere des synthetischen Co-Polymers PLURONIC F127, in eine Stangenform gebracht werden und anschließend direkt oder umfasst von einer Hülle in Fleisch gedrückt werden können.

Die US 2004/0149146 A1 beschreibt eine Gewürzmischung in Pulverform oder als Feststoff, wobei der Feststoff unter Verwendung eines Bindemittels hergestellt wird, das sich bei einer vorgewählten Temperatur zersetzt und daher die Bestandteile der Gewürzmischung freisetzt.

EP 0537855 A2 beschreibt das Einspritzen von Salzlake in Fleisch mit einer Vielzahl paralleler Nadeln, die gekoppelt mit dem Vortrieb einer Transporteinrichtung in das Fleisch gepresst werden. Das Injizieren von Salzlake in Fleisch ist durch nachteilig, dass mit der Salzlake Lösungswasser eingebracht wird, das die Produktqualität beeinträchtigen kann und nur mit aufwändigen Trocknungsverfahren entfernbar ist.

Die WO00/32051 A1 beschreibt das Besprühen von Geflügelfleisch mit kleinen Feststoffpartikeln bzw. Pulver mittels Hochdrucksprühdüsen. Bevorzugt werden gesprühte Partikel durch elektrostatische Abscheidung auf das Fleisch gebracht.

### Aufgabe der Erfindung

Der Erfindung stellt sich die Aufgabe, eine Vorrichtung und ein damit durchführbares Verfahren zum Einbringen von Lebensmittelzusatzstoffen, insbesondere von Salz, in feste Lebensmittel bereitzustellen, mit dem der Eintrag von Lösungswasser vermieden wird.

### Allgemeine Beschreibung der Erfindung

Die Erfindung löst die Aufgabe mit den Merkmalen der Ansprüche, insbesondere mit einer Vorrichtung, die eine Fördereinrichtung aufweist, die zur Beschleunigung eines Feststoffs, der Lebensmittelzusatzstoffe umfasst oder daraus besteht, eingerichtet ist und einen Auslass aufweist, der auf das Lebensmittel ausrichtbar ist, insbesondere auf den an einen Träger angrenzenden Bereich gerichtet ist, in dem das Lebensmittel angeordnet ist. Der Träger kann beispielsweise ein Förderband oder eine Rutsche sein, worauf angrenzend das Lebensmittel angeordnet werden kann, oder ein anderer Träger, der mit dem Lebensmittel in Eingriff tritt, wie beispielsweise ein Haken, insbesondere wenn das Lebensmittel Fleisch ist, so dass das Lebensmittel in dem unter dem Haken angrenzenden Bereich angeordnet ist.

Der Feststoff weist als Bestandteile vorzugsweise Salz, z.B. reines Speisesalz (NaCl, optional mit einem Gehalt an MgCl₂ und/oder KCl), oder eine Mischung von Speisesalz mit Lebensmittelzusatzstoffen, beispielsweise Gewürzen, Aromen, Konservierungsmitteln, z.B. Nitrit, Farbstoffen, Bindemitteln, z.B. Glukose, Glukosesirup, Phosphate, Zucker etc. auf oder besteht daraus. Erfindungsgemäß ist der Feststoff z.B. eine Mischung von Salz mit anderen Lebensmittelzusatzstoffen und ist bei Umgebungsbedingungen fest, insbesondere frei von Lösungswasser.

Generell ist es bevorzugt, dass die Fördereinrichtung relativ zum Träger beweglich von einer Halterung gehalten ist, um den Auslass in einem geringen Abstand von dem Lebensmittel anzuordnen. Die Halterung kann z.B. eine optische Steuerung oder einen gegen das Lebensmittel anzuordnenden Abstandshalter aufweisen, der einen vorbestimmten Abstand des Auslasses zu einem Lebensmittel einstellt.

Die Fördereinrichtung ist eingerichtet, den Feststoff bis mindestens zu einer Geschwindigkeit zu beschleunigen, die für das Eindringen in das Lebensmittel ausreicht, bis zu einer Eindringtiefe von 0,5 bis 5 cm. Eine solche, für das Eindringen erforderliche Geschwindigkeit hängt von ballistischen Faktoren z.B. von der Korngröße bzw. dem Querschnitt und der Masse des Feststoffstücks, dem Abstand des Auslasses zum Lebensmittel, dem Luftwiderstand etc. ab. Diese Geschwindigkeit kann z.B. durch Beschleunigen des Feststoffs einer bestimmten Korngröße auf ein optisch durchlässiges Ersatzmaterial für das Lebensmittel und Bestimmen der Eindringtiefe vorbestimmt sein. Als ein solches optisch durchlässiges Ersatzmaterial für Lebensmittel eignen sich z.B. mit Gelatine oder Seife verfestigte wässrige Zusammensetzungen, z.B. mit einer Bloomzahl von 200-350, wie sie z.B. als ballistische Gelatine oder Seife erhältlich sind.

Die Fördereinrichtung kann in der ersten Ausführungsform eine mit Druckgas, z.B. von 50 - 5000 bar, z.B. 150 bis 500 bar, beaufschlagbare Düse sein, deren Innenvolumen mit dem Auslass einer Dosiereinrichtung für den Feststoff verbunden ist. Bevorzugt ist die Düse gesteuert mit Druckgas beaufschlagbar, beispielsweise dadurch, dass die Düse mit einer Quelle für Druckgas, beispielsweise einem Kompressor oder einer Druckgasflasche, mittels einer Druckleitung verbunden ist, in der ein gesteuertes Ventil angeordnet ist. Bevorzugt ist das Ventil in Abhängigkeit von der Position des Trägers gesteuert, beispielsweise in Abhängigkeit von der Stellung eines motorischen Antriebs des Trägers oder abhängig von dem Signal eines Positionsdetektors, der die Position des Lebensmittels an dem Träger detektiert, wobei das Signal die Position des Lebensmittels wiedergibt. Ein solcher Detektor kann eine Kamera sein. An der Fördereinrichtung ist eine Dosiereinrichtung angeordnet, die mit dem Innenvolumen der Fördereinrichtung verbunden ist und die insbesondere eingerichtet ist, den Feststoff dem Einlassende der Fördereinrichtung zuzuführen, deren Auslassende auf den an den Träger angrenzenden Bereich gerichtet ist. Weiter bevorzugt ist auch die Dosiereinrichtung gesteuert, beispielsweise abhängig von der Position des Trägers oder das gesteuerte Ventil beschrieben. Die Dosiereinrichtung kann koordiniert mit dem Ventil, das in der Druckleitung angeordnet ist, gesteuert sein, beispielsweise so, dass die Dosiereinrichtung vor und/oder während der Offenstellung des gesteuerten Ventils Feststoff in die Düse fördert. Die Düse kann kontinuierlich oder periodisch gesteuert stoßweise mit Druckgas beaufschlagbar sein, z.B. dadurch, dass das Ventil in der Druckleitung periodisch geöffnet und geschlossen wird. Die Korngröße des Feststoffs ist bevorzugt auf eine vorbestimmte Größe eingestellt, um bei dem Druck des Druckgases definierte Eindringtiefen zu erreichen.

In der ersten Ausführungsform ist die Vorrichtung eingerichtet, den Auslass der Düse in einem vorbestimmten Abstand relativ zum Lebensmittel zu positionieren, um aus der Düse austretendes Druckgas entweichen zu lassen. Für den vorbestimmten Abstand kann die Düse einen ihren Auslass überragenden Abstandshalter aufweisen, dessen von dem Auslass beabstandetes Ende gegen ein Lebensmittel anordnbar ist. Ein solcher Abstandshalter kann z.B. eine Rolle oder ein Gleitelement sein.

In der ersten Ausführungsform kann die Dosiereinrichtung eine mit einem gesteuerten Ventil versehene Zuführleitung sein, die in die Düse mündet, die wahlweise den Feststoff unter Schwerkrafteinfluss fördert oder ein Transportelement aufweist, beispielsweise eine motorisch angetriebene Transportschnecke oder einen angetriebenen verschieblichen Kolben in der Zuführleitung. Das Druckgas kann Stickstoff, CO₂ und/oder Luft sein oder auch ein zündfähiges Gemisch aus Gasen, wobei die Düse eine Zündvorrichtung aufweist, um das zündfähige Gasgemisch für die Beschleunigung des Feststoffs zu zünden. Für die Zwecke der Erfindung kann jeder Kolben ein angetriebenes verschiebliches Element sein, das entlang einer Leitung bzw. eines Rohrstücks geführt ist.

Wie mit Bezug auf die zweite Ausführungsform beschrieben, kann die Dosiereinrichtung auf eine Temperatur beheizbar sein, bei der zumindest ein Teil der Lebensmittelzusatzstoffe fließfähig wird bzw. schmilzt. In dieser Variante bilden die Lebensmittelzusatzstoffe durch zumindest teilweises An- oder Aufschmelzen zumindest nach der Verfestigung auf einer anschließenden Kühlstrecke oder innerhalb der Düse einen partikelförmigen Feststoff, der insbesondere ein stangenförmiger Feststoff ist.

In einer zweiten Ausführungsform weist die Fördereinrichtung eine Presse mit daran angeschlossener Leitung auf, deren Auslass bevorzugt auf den Bereich gerichtet ist, der an den Träger angrenzt bzw. in dem das Lebensmittel angeordnet ist, so dass der Auslass dicht an oder in Kontakt mit dem Lebensmittel anordnbar ist.

Die Presse kann z.B. ein Extruder, eine Kolbenpresse oder eine Zahnradpumpe sein. Die Presse weist einen Einlass für die Lebensmittelzusatzstoffe auf, insbesondere Salz oder ein Salzgemisch mit anderen Lebensmittelzusatzstoffen, die in das Fleisch eingebracht werden sollen, und ist eingerichtet, die Lebensmittelzusatzstoffe mit einem Druck zu beaufschlagen, bei dem diese zu einem stangenförmigen Feststoff geformt werden. Dabei ist der Feststoff zumindest abschnittsweise einstückig, insbesondere stangenförmig. Bevorzugt ist die Presse klimatisierbar, insbesondere temperierbar, z.B. abschnittsweise beheizt oder gekühlt, z.B. durch einen Doppelmantel des Gehäuses, im Falle eines Extruders optional zusätzlich des Rotors. Die Leitung, die an die Presse angeschlossen ist, formt den aus der Presse austretenden Feststoff zumindest abschnittsweise zu Stangen, während die Lebensmittelzusatzstoffe mittels der Presse durch die Leitung geschoben werden. Die Fördereinrichtung mit Leitung und Presse kann so ausgelegt sein, dass ein für die plastische Verformung der Lebensmittelzusatzstoffe ausreichender Druck in der Leitung erreicht wird, beispielsweise dadurch, dass die Leitung bei gleichbleibender Fördergeschwindigkeit der Presse sich zu ihrem Auslass verjüngt und daher der Druck in den Lebensmittelzusatzstoffen zum Auslass steigt, z.B. um Lebensmittelzusatzstoffe rekristallisieren und/oder aneinander haften zu lassen. Entsprechend kann sich die Leitung von ihrem an die Presse angrenzenden Abschnitt zu ihrem Auslass verjüngen oder einen konstanten Innenquerschnitt aufweisen. Die an die Presse angrenzende Leitung kann durch eine Düse gebildet sein, die den lichten Innenquerschnitt der Presse zu einem Auslass verjüngt.

Optional kann die Presse, insbesondere in der Ausführungsform als Extruder, und/oder die anschließend angeordnete Leitung zumindest einen Dampfaustritt aus dem Innenvolumen ausweisen, beispielsweise Dampfauslassbohrungen, um Wasser aus den gepressten Lebensmittelzusatzstoffen austreten zu lassen. In dieser Ausführungsform kann den der Presse zugeführten Lebensmittelzusatzstoffen Lösungswasser zugesetzt sein, z.B. um eine pumpfähige Mischung herzustellen, in der ggf. Lebensmittelzusatzstoffe als Feststoff, z.B. kristallin, vorliegen können. Die Mischung der Lebensmittelzusatzstoffe mit Lösungswasser kann z.B. eine Aufschlämmung bilden, in der wasserlösliche Lebensmittelzusatzstoffe anteilig ungelöst bzw. kristallin vorliegen.

Optional ist die Leitung in einem an die Presse angrenzenden Abschnitt beheizbar, der z.B. einen Doppelmantel für Temperiermedium aufweisen kann. Weiter optional ist die Leitung abschnittsweise gekühlt, z.B. mit einem Doppelmantel für Temperiermedium. Der Querschnitt und der Auslass der Leitung sind vorzugsweise rund.

Der Auslass der Leitung kann z.B. einen Innendurchmesser von 0,2 oder 0,5 mm bis 25 mm oder bis 15 mm, z.B. 2 bis 10 mm, bevorzugt 2 bis 7 mm oder bis bis 6mm aufweisen, z.B. bis 3mm oder bis 2mm.

In der zweiten Ausführungsform werden die Lebensmittelzusatzstoffe mittels der Presse und der daran angeschlossenen Leitung zu einem stangenförmigen Feststoff, insbesondere Salzmasse, geformt, der eine hinreichende Festigkeit aufweist, um in das Lebensmittel eingebracht zu werden. Dabei kann allein der durch die Presse auf die Lebensmittelzusatzstoffe aufgebrachte Druck den stangenförmigen Feststoff bis in das Lebensmittel beschleunigen, so dass im Verfahren der Feststoff nach Austritt aus dem Auslass der Leitung in das Lebensmittel eingebracht wird. Dabei ist generell bevorzugt, dass in der zweiten Ausführungsform das Lebensmittel während des Einbringens des stangenförmigen Feststoffs nicht relativ zum Auslass bewegt wird. Insbesondere kann der Träger der Vorrichtung Formen aufweisen, die zum Auslass hin offen sind, bzw. das Lebensmittel kann in zum Auslass offenen Formen angeordnet sein, die eine Bewegung des Lebensmittels während des Einbringens des Feststoffs vermindern.

Die Presse und/oder die daran angeschlossene Leitung können bis auf eine Temperatur beheizbar sein, bei der unter dem von der Presse erzeugten Druck zumindest ein Teil der Lebensmittelzusatzstoffe fließfähig wird bzw. schmilzt.

Die Presse und/oder die daran angeschlossene Leitung können bis auf eine Temperatur zu kühlen sein, bei der das Gemisch der Lebensmittelzusatzstoffe durch dessen Restfeuchte zusammenhält, insbesondere enthaltenes Wasser friert, z.B. kurzfristig zusammenhält, wie es für das Einbringen in das Lebensmittel erforderlich ist. Bei der Formung des Feststoffs, insbesondere stangenförmigen Feststoffs, durch Kühlen, insbesondere Kühlen der Presse und/oder der angeschlossenen Leitung, bildet gefrorenes Wasser ein Bindemittel der Lebensmittelzusatzstoffe.

Optional kann die Fördereinrichtung eine an den Auslass der Leitung anschließende Transporteinrichtung aufweisen, die den stangenförmigen Feststoff nach deren Austritt aus dem Auslass der Leitung gegen das Lebensmittel beschleunigt. Eine solche Transporteinrichtung kann z.B. ein Rohrstück aufweisen, an dessen Eintrittsende, unmittelbar oder in einem Abstand, eine Druckgasquelle angeschlossen ist und dessen Austrittsende auf das Lebensmittel gerichtet ist. Das Rohrstück kann an seinem Eintrittsende gesteuert verschließbar sein, z.B. mittels eines Verschlusses, z.B. einer Klappe oder eines Schiebers. Bevorzugt ist der Verschluss etwa parallel zum Querschnitt des Rohrstücks beweglich geführt, z.B. in einer parallel zum Querschnitt des Rohrstücks angeordneten Führung. Das Eintrittsende kann z.B. angrenzend an oder in einem Abstand von dem Auslass der Leitung angeordnet sein, so dass stangenförmiger Feststoff in das Eintrittsende eingeschoben werden kann und, insbesondere nach Verschließen des Eintrittsendes, das Rohrstück mit Druckgas beaufschlagt wird. Das Beaufschlagen mit Druckgas erfolgt generell bevorzugt stoßweise, um den stangenförmigen Feststoff aus dem Rohrstück zu beschleunigen.

Optional kann die Transporteinrichtung auch eine mechanische Auswurfeinrichtung, die z.B. elektronisch, pneumatisch, oder chemisch (durch gesteuerte Explosion) getrieben ist, aufweisen, die den Feststoff entsprechend beschleunigt. Der Antrieb der mechanischen Transporteinrichtung kann z.B. in einer Druckkammer Druck speichern, der der Transporteinrichtung zugeführt wird und dadurch gesteuert ist, dass ein verrasteter Verschluß des Rohrstücks zu einem geeigneten Zeitpunkt geöffnet wird. In Alternative kann die Transporteinrichtung einen Kolben aufweisen, der in einem Rohrstück geführt ist, um den Feststoff in das Lebensmittel zu beschleunigen bzw. zu drücken.

In der Leitung, die eine Druckgasquelle mit dem Rohrstück verbindet, ist bevorzugt ein steuerbares Ventil angeordnet, das bevorzugt abhängig von dem Verschließen des Rohrstücks gesteuert ist. Das Ventil ist bevorzugt ein schnell schaltbares Ventil.

In einer Variante der zweiten Ausführungsform weist die Vorrichtung einen Vorratsbehälter für stangenförmigen Feststoff auf, der vorgefertigt ist. Der Auslass des Vorratsbehälters ist an einer Transporteinrichtung angeordnet, wie sie mit Bezug auf die zweite Ausführungsform beschrieben ist. In dieser Variante bildet der Vorratsbehälter einen Zwischenspeicher für vorgefertigten stangenförmigen Feststoff, so dass die Fördereinrichtung räumlich getrennt angeordnet sein kann und/oder zeitlich versetzt zum Einbringen des stangenförmigen Feststoffs in das Lebensmittel betrieben werden kann.

Als eine an der Presse angeschlossene Zuführeinrichtung für die Lebensmittelzusatzstoffe der zweiten Ausführungsform kann die Vorrichtung eine Heizeinrichtung für zumindest einen Teil der Lebensmittelzusatzstoffe aufweisen, die auf eine Temperatur beheizbar ist, bei der zumindest ein Teil der Lebensmittelzusatzstoffe fließfähig wird bzw. schmilzt. Eine solche Heizeinrichtung kann z.B. zum Durchtritt wärmebeständiger Lebensmittelzusatzstoffe, z.B. Salz, vorgesehen sein und in einem Abstand von einem Zuführstutzen der Presse für wärmempfindliche Lebensmittelzusatzstoffe in die Presse münden. Die Heizeinrichtung kann eingerichtet sein, wärmebeständige Lebensmittelzusatzstoffe nur teilweise erweichen zu lassen bzw. anzuschmelzen oder eine Schmelze dieser Lebensmittelzusatzstoffe bereitzustellen. Die Heizeinrichtung kann auch in Kombination mit einer Druckerhöhung betätigt werden, um die Lebensmittelzusatzstoffe erweichen zu lassen.

Das Verfahren zum Herstellen von Lebensmitteln mit dem Schritt des Einbringens des stangenförmigen Feststoffs aus Lebensmittelzusatzstoffen in Lebensmittel sieht vor, den Feststoff mittels einer Fördereinrichtung, deren Auslass auf das Lebensmittel ausgerichtet ist, zu beschleunigen.

Erfindungsgemäß wird der Feststoff mindestens auf eine Geschwindigkeit beschleunigt, die für das Eindringen in das Lebensmittel ausreicht. Der Feststoff kann z.B. mittels der Beaufschlagung mit Druckgas in einer Düse beschleunigt werden, insbesondere gesteuert mittels eines gesteuerten Ventils, das in der Druckleitung zwischen der Druckgasquelle und der Düse angeordnet ist.

Lebensmittelzusatzstoffe werden mittels einer Presse, an die eine Leitung angeschlossen ist, zu einem stangenförmigen Feststoff geformt, insbesondere zu einem stangenförmigen Feststoff gepresst. Der stangenförmige Feststoff kann unmittelbar nach Austritt aus der Leitung in das Lebensmittel geschoben werden, wahlweise angetrieben durch den Druck der Presse oder alternativ mittels eines an die Leitung anschließend angeordneten Rohrstücks, das nach Eintritt stangenförmigen Feststoffs aus Lebensmittelzusatzstoffen mit Druckgas beaufschlagt wird oder mittels eines in dem Rohrstück geführten Kolbens beschleunigt wird. Ein solches, mit Druckgas gesteuert beaufschlagbares Rohrstück ist bevorzugt an seinem Eintrittsende, das dem Auslass der Leitung zugewandt ist, verschließbar, insbesondere koordiniert mit der Beaufschlagung mit Druckgas verschließbar. In einer Alternative kann der stangenförmige Feststoff aus Lebensmittelzusatzstoffen mit einem angetriebenen Kolben in das Lebensmittel geschoben werden. Der Kolben kann in einem an dem Auslass der Leitung angeordneten Rohrstück geführt sein, das auf das Lebensmittel gerichtet ist.

In einer Variante der zweiten Ausführungsform können die Lebensmittelzusatzstoffe, aus denen der Feststoff besteht, mit einem Zusatz an Lösungswasser und/oder eines Lösungsmittels in die Presse eingetragen werden, wobei die Presse und/oder die daran anschließende Leitung zumindest einen Dampfauslass aufweisen, um das Lösungswasser bzw. Lösungsmittel aus den mit Druck beaufschlagten Lebensmittelzusatzstoffen bzw. aus dem stangenförmigen Feststoff austreten zu lassen.

In dieser Ausführungsform weist der stangenförmige Feststoff ebenfalls kein Lösungswasser auf und hat eine ausreichende mechanische Festigkeit, um in das Lebensmittel einzudringen.

Das Verfahren erlaubt das Einbringen von Feststoffen aus Lebensmittelzusatzstoffen, insbesondere aus Salz einschließlich Salzmischungen, in das Volumen eines Lebensmittels ohne den Eintrag von Lösungswasser. Entsprechend zeichnen sich mit dem Verfahren hergestellte Lebensmittel dadurch aus, dass ihre Struktur nicht durch das Einbringen von Lösungswasser, gegebenenfalls mit anschließendem Austragen des Lösungswassers verändert ist, sowie durch eine gleichmäßigere Verteilung von Lebensmittelzusatzstoffen aus dem Feststoff innerhalb des Volumens des Lebensmittels, als dies durch einen rein äußerlichen Auftrag von Lebensmittelzusatzstoffen, insbesondere Salz, möglich wäre.

Alternativ kann der Feststoff dadurch aus den Lebensmittelzusatzstoffen gebildet werden, dass diese geformt und gefroren werden, optional unter Zusatz von Wasser. Das Frieren der Lebensmittelzusatzstoffe kann z.B. in der an eine Presse angrenzenden Leitung durch Kühlen der Leitung erfolgen oder durch Kühlen der Lebensmittelzusatzstoffe in einer ruhenden Form. Für die erste Ausführungsform kann das Kühlen zur Erzeugung des Feststoffs durch Frieren in einem Mischer oder einer Dragiertrommel, jeweils unter Kühlung, erfolgen.

Das Verfahren zum Einbringen von Lebensmittelzusatzstoffen sieht vor, dass die Lebensmittelzusatzstoffe als Feststoff, wobei der Feststoff insbesondere festes Salz ist, das auch eine feste Mischung von Salz mit Lebensmittelzusatzstoffen sein kann, wobei der Feststoff bzw. Lebensmittelzusatzstoffe insbesondere frei von Lösungswasser, insbesondere frei von flüssigem Lösungswasser ist, beschleunigt wird. Generell bevorzugt weist der Feststoff eine Länge auf, die größer als sein Durchmesser ist. Bevorzugt weist der Feststoff einen zylindrischen oder rechteckigen, z.B. quadratischen Querschnitt auf, der sich konstant entlang einer dazu senkrechten Achse, die z.B. eine Längsachse bildet, erstreckt. Alternativ kann der stangenförmige Feststoff entlang einer zu seinem Querschnitt senkrechten Achse einen Querschnitt aufweisen, der sich abschnittsweise verjüngt und/oder zunimmt, z.B. mit einem zweiten, zum ersten senkrechten Querschnitt, der oval ist, so dass der stangenförmige Feststoff z.B. die Form eines gestreckten Pellets hat.

Dieses Verfahren führt dazu, dass die Lebensmittelzusatzstoffe als Feststoff unmittelbar in das Lebensmittel eingebracht werden. Das Lebensmittel wird an einem Träger angeordnet, so dass es in einem an den Träger angrenzenden Bereich angeordnet ist. Der Feststoff wird bevorzugt mittels einer Vorrichtung beschleunigt, deren Auslass auf den an den Träger angrenzenden Bereich gerichtet ist, in dem das Lebensmittel angeordnet ist.

In einer ersten Ausführungsform werden die Lebensmittelzusatzstoffe, die als stangenförmiger Feststoff vorliegen, kontinuierlich oder stoßweise in eine Düse dosiert und mittels eines Druckgases aus dem Auslass der Düse beschleunigt, der gegen das Lebensmittel gerichtet ist. Generell weist der stangenförmige Feststoff einen Durchmesser von 0,2 oder 0,5 mm bis 25 mm oder bis 15 mm, z.B. 2 bis 10 mm, bevorzugt 2 bis 7 mm oder bis 6mm auf z.B. bis 3 mm oder bis 2 mm, insbesondere mit rundem Querschnitt, bei einer Länge, die größer als der Durchmesser ist, z.B. um den Faktor 1,5 bis 20, z.B. um den Faktor 5 bis 10 länger als der Durchmesser. Die Düse kann kontinuierlich oder gesteuert stoßweise mit Druckgas beaufschlagt werden. Bevorzugt werden die Lebensmittelzusatzstoffe stoßweise in die Düse dosiert, während die Düse gesteuert stoßweise mit Druckgas beaufschlagt wird, insbesondere jeweils gesteuert vor, gleichzeitig mit oder nach dem Dosieren der Lebensmittelzusatzstoffe in die Düse.

Das Druckgas kann z,B. unter Druck stehende Luft, Stickstoff, Helium, Argon oder Mischungen dieser oder ein zündfähiges Gasgemisch sein. Der Druck kann z.B. 3 bis 700, z.B. bis 150 oder bis 200 bar betragen. Es ist bevorzugt, dass der Feststoff, wenn er mittels Druckgas aus einem Rohrstück beschleunigt wird, auf eine Geschwindigkeit von 200 bis 800 km/h, z.B. auf 250 bis 550 km/h oder bis 350 km/h beschleunigt wird.

In Ausführungsformen, in denen die Lebensmittelzusatzstoffe als stangenförmiger Feststoff vorliegen, kann der Feststoff aus einem Vorratsbehälter in ein Rohrstück gebracht werden und mittels des Rohrstücks durch Beaufschlagung mit Druckgas beschleunigt werden. Dabei kann das Rohrstück an seinem Eintrittsende einen Verschluß aufweisen, der nach Einführen stangenförmigen Feststoffs verschlossen wird und anschließend ein Abschnitt des Rohrstücks zwischen dem Verschluß und dem stangenförmigen Feststoff mit Druckgas beaufschlagt wird. Die Druckleitung, mit der dem Rohrstück Druckgas zugeführt wird, kann am Verschluß oder im Rohrstück münden. In dieser Ausführungsform ist es bevorzugt, dass die Lebensmittelzusatzstoffe mittels einer Presse, an die eine Leitung angeschlossen ist, zu stangenförmigem Feststoff geformt werden. Dies kann durch Pressen von festen Lebensmittelzusatzstoffen ohne Zusetzen von Lösungswasser oder Lösungsmittel erfolgen oder mit Zusatz einer geringen Masse Lösungswasser bzw. Lösungsmittel, wobei die Presse und/oder die daran anschließende Leitung einen Dampfaustritt aufweist, aus dem das Lösungswasser bzw. Lösungsmittel als Dampf austritt. Bevorzugt ist die Presse und/oder die Leitung beheizt oder gefroren, insbesondere tiefgekühlt. Alternativ können für diese Ausführungsform die Lebensmittelzusatzstoffe zu Pellets gepresst und/oder gefroren werden oder zu Agglomeraten aus Lebensmittelzusatzstoffen verbunden werden, z.B. mittels einer Dragiertrommel.

Das Rohrstück weist generell bevorzugt einen zum Querschnitt des Feststoffs passenden Innenquerschnitt auf, in dem der Feststoff geführt ist. Ein zum Querschnitt des Feststoffs passender Innenquerschnitt kann den Querschnitt des Feststoffs mit einem um den Feststoff umlaufenden Abstand von z.B. 0,1 bis 2 mm, bevorzugt von bis zu 1,5 oder bis zu 1 mm aufnehmen, z.B. mit einer Passung, die ein Beschleunigen des Feststoffs durch das Rohrstück zulässt. Optional weist das Rohrstück zumindest einen Zug auf, der als spiralförmige Nut längs zur Längsachse des Rohrstücks in dessen Innenwand verläuft.

In der zweiten Ausführungsform wird Salz durch eine Presse mit anschließender Leitung zu stangenförmiger Salzmasse geformt und direkt oder mittels eines anschließenden Rohrstücks, das mit Druckgas beaufschlagt wird oder in dem ein Kolben geführt ist, gegen das Lebensmittel beschleunigt.

In Ausführungsformen, in denen der stangenförmige Feststoff in einem Rohrstück gegen das Lebensmittel beschleunigt wird, wird bevorzugt zwischen dem stangenförmigen Feststoff und dem Rohrstück ein Gleitmittel angeordnet. Das Gleitmittel kann dadurch zwischen dem stangenförmigen Feststoff und dem Rohrstück angeordnet werden, dass der stangenförmige Feststoff zumindest abschnittsweise, vorzugsweise vollständig umfänglich mit dem Gleitmittel beschichtet ist, oder dadurch, dass das Rohrstück eine Zuführeinrichtung für das Gleitmittel aufweist, die Gleitmittel in das Rohrstück einbringt und/oder auf den stangenförmigen Feststoff aufbringt. Das Gleitmittel kann z.B. Wasser oder ein festes oder flüssiges Fett bzw. Öl sein, das z.B. in erstarrter Form als Beschichtung auf dem stangenförmigen Feststoff aufliegt, oder in flüssiger Form in das Rohrstück eingebracht wird. Ein besonderer Vorteil des erfindungsgemäßen Verfahrens ergibt sich dann, wenn das Lebensmittel Warmfleisch ist, da mit dem schnellen Einbringen von Salz in das Volumen von Warmfleisch die Totenstarre (Schwein nach ca. 45 min, Rind ca. 60-90min) gemindert oder gar aufgehoben werden kann. Dadurch verbessern sich die Produkteigenschaften erheblich. Warmfleisch ist bevorzugt Fleisch unmittelbar nach der Schlachtung, z.B. innerhalb von maximal 40, bevorzugt maximal 30, bevorzugter maximal 20 oder maximal 10 min nach der Schlachtung bei Schweinefleisch bzw. innerhalb von maximal 60, bevorzugt maximal 50, bevorzugter maximal 40 oder maximal 30 min, noch bevorzugter innerhalb max. 20 oder 10 min nach der Schlachtung bei Rindfleisch. In einem weiter bevorzugten Verfahren ist das Lebensmittel roher oder gegarter Schinken vom Schwein oder Rind. Dabei kann der Feststoff z.B. zu zumindest 90 Gew.% aus Salz bestehen.

Entsprechend betrifft das Verfahren ein Verfahren zur Herstellung von Lebensmitteln, insbesondere Fleisch, bevorzugt Warmfleisch, in das Lebensmittelzusatzstoffe in Form eines Feststoffs eingebracht sind, insbesondere Lebensmittel, die im Innern Lebensmittelzusatzstoffe aufweisen, durch das Einbringen der Lebensmittelzusatzstoffe in Form eines Feststoffs in Stangenform. Das mit dem Verfahren hergestellte, mit Lebensmittelzusatzstoffen in Form eines Feststoffs im Innern versehene Lebensmittel, insbesondere Fleisch, zeichnet sich in der Ausführungsform, in der der Feststoff ohne Lösungswasser ist, dadurch aus, dass es kein zusätzliches Wasser bzw. kein mit den Zusatzstoffen eingetragenes Wasser enthält, und durch Einstichkanäle, durch die der Feststoff eingebracht wurde.

Die Erfindung wird nun genauer an Hand von Beispielen und mit Bezug auf die Figuren beschrieben, die schematisch in
- Figur 1 eine erfindungsgemäße Vorrichtung,
- Figur 2 eine weitere erfindungsgemäße Vorrichtung,
- Figur 3 eine weitere erfindungsgemäße Vorrichtung,
- Figur 4 eine weitere erfindungsgemäße erfindungsgemäße Vorrichtung,
- Figur 5 eine Transporteinrichtung für die erfindungsgemäße Vorrichtung,
- Figur 6 eine Darstellung des mit dem Verfahren erhältlichen Lebensmittels und
- Figur 7 eine Darstellung des mit dem Verfahren erhältlichen Lebensmittels zeigen.

In den Figuren sind funktionsgleiche Elemente mit gleichen Bezugsziffern versehen.

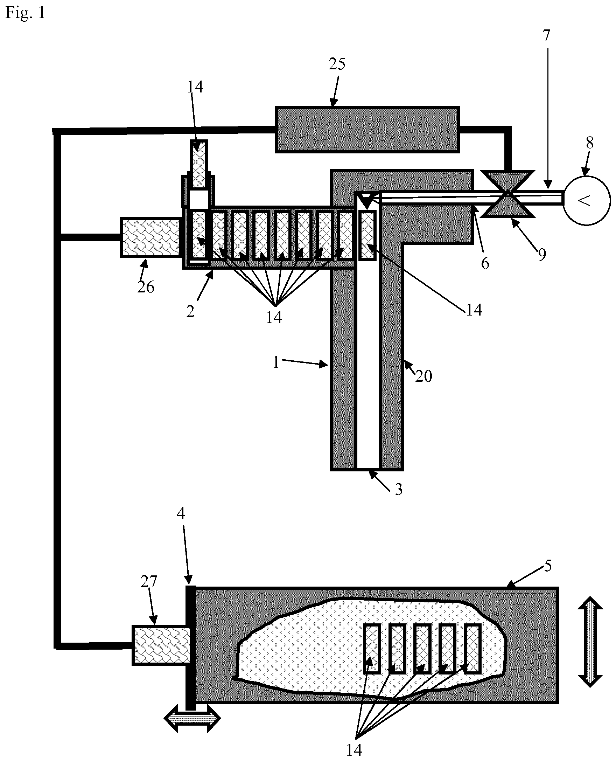

Figur 1 zeigt eine Dosiereinrichtung 2, die stangenförmigen Feststoff 14 in eine als Rohrstück 20 ausgebildete Düse 1 einführt. Das Austrittsende 23 des Rohrstücks 20 ist auf das an einem Träger 4 angeordnete Lebensmittel 5 gerichtet. Der Einlass 6 für Druckgas ist mit einer Druckleitung 7 mit einer Druckquelle 8 verbunden, die z.B. eine Druckflasche oder ein Verdichter ein kann, wobei in der Druckleitung 7 ein Ventil 9 angeordnet ist, das den Zustrom von Druckgas in das Rohrstück 20 steuert. Die Dosiereinrichtung 2 ist zur Zuführung des Lebensmittelzusatzstoffs in Form des stangenförmigen Feststoffs 14 in das Rohrstück 20 eingerichtet und kann z.B. in Form eines beweglichen Magazins, z.B. eines Trommelmagazins, ausgebildet sein. Die Dosiereinrichtung 2 wird mit stangenförmigem Feststoff 14 befüllt, z.B. mittels einer Presse aus pulverförmigem Zusatzstoff hergestellt ist. Durch Öffnen des Ventils 9 strömt Druckgas durch die Druckleitung 7 in das dem Austrittsende 23 gegenüberliegende Ende des Rohrstücks 20 und beschleunigt den stangenförmigen Feststoff 14, der durch die Dosiereinrichtung 2 in das Rohrstück 20 eingebracht wurde, gegen das Lebensmittel 5. Durch den Impuls, den der stangenförmige Feststoff 14 durch die Beschleunigung innerhalb des Rohrstücks 20 erhält, dringt er in das Lebensmittel 5 ein, wie schematisch durch den weggebrochen gezeigten Abschnitt des Lebensmittels 5 zu sehen ist. Durch Verfahren des Lebensmittels 5, z.B. durch eine Relativbewegung des Trägers 4 zum Rohrstück 20 können mehrere stangenförmige Feststoffe 14 in das Lebensmittel 5 eingebracht werden.

Der Träger 4 ist mittels des Antriebs 27 beweglich, z.B. wie durch die beiden Doppelpfeile angedeutet entlang zweier zueinander senkrechter Bewegungsrichtungen. Optional ist der Antrieb 27 des Trägers 4 und/oder der Antrieb 26 der Dosiereinrichtung 2 und/oder das Ventil 9 für das Druckgas abhängig von einer Steuereinrichtung 25 gesteuert.

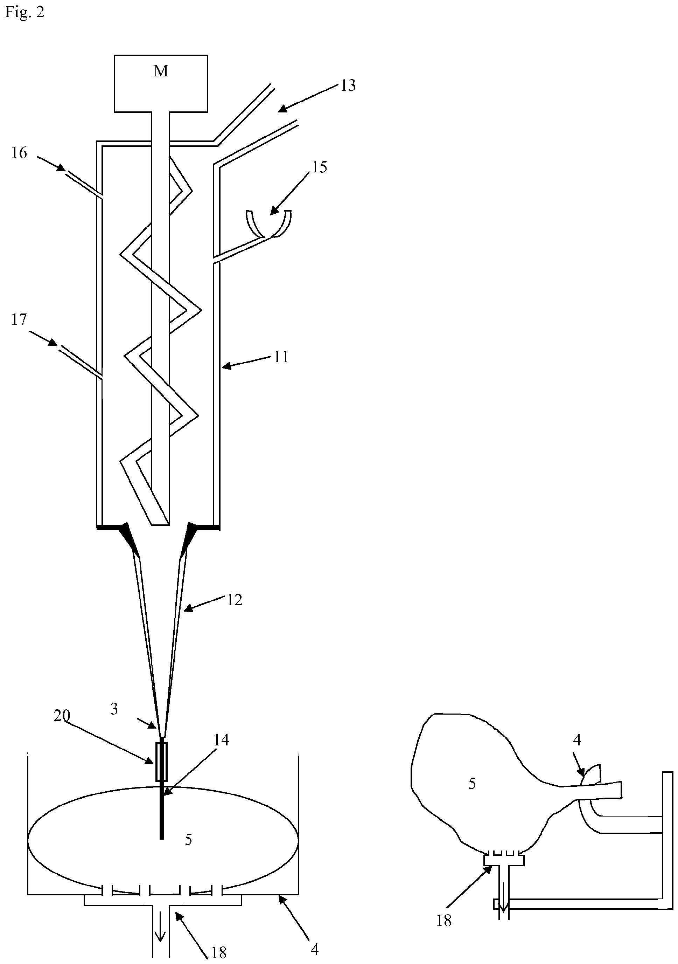

Figur 2 zeigt die Ausführungsform, in der eine durch einen Motor M angetriebene Presse 11, hier beispielhaft durch einen Extruder dargestellt, durch eine Leitung 12 fördert und zu stangenförmigem Feststoff 14 formt, der unmittelbar durch die Presse 11 in das Lebensmittel 5 beschleunigt wird. Die Presse weist einen Einlass für Lebensmittelzusatzstoff auf, z.B. schüttfähiges Salz, sowie entsprechend der bevorzugten Ausführung zumindest einen Zuführstutzen 17 und optional einen Einlass mit einer Heizeinrichtung 15 auf, jeweils für Lebensmittelzusatzstoffe. Das Lebensmittel 5 ist mittels einer Saugeinrichtung 18, die innerhalb eines Trägers 4 angeordnet ist, um das Lebensmittel ohne Relativbewegung zur Leitung 12 zu halten, während der stangenförmige Feststoff 14 aus dem Auslass 3 in das Lebensmittel beschleunigt bzw. eingepreßt wird. Als Alternative zu einem Träger 4, der das Lebensmittel 5 abschnittsweise umfasst, kann der Träger 4 ein Haken sein, an dem das Lebensmittel 5 befestigt ist, bevorzugt in Kombination mit einer Saugeinrichtung 18, die gegen den Bereich gerichtet ist, der an den Träger 4 angrenzt und in dem das Lebensmittel 5 angeordnet ist. Ein optionales Rohrstück 20 dient zur Führung des aus der Leitung 12 austretenden stangenförmigen Feststoffs 14.

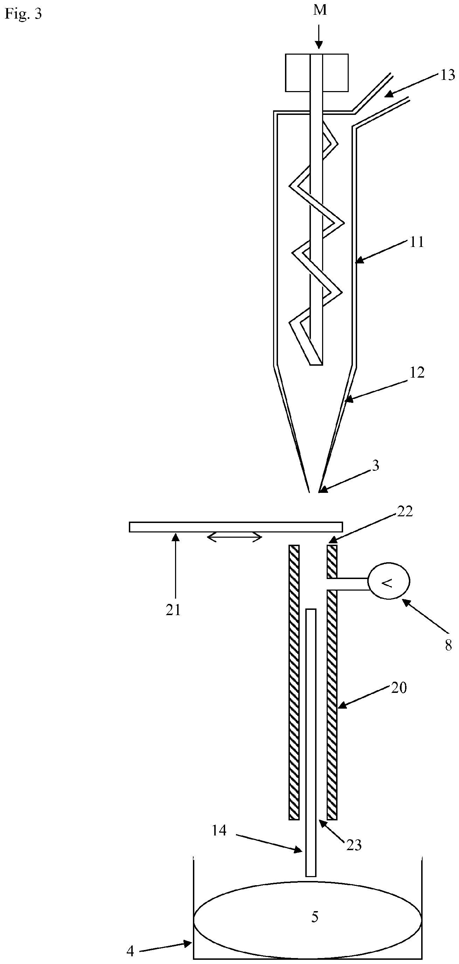

Figur 3 zeigt eine Transporteinrichtung mit einem Rohrstück 20, das zwischen dem Auslass 3 der Leitung 12 und dem Träger 4 angeordnet ist. Das Rohrstück 20 weist einen Verschluss 21 an seinem Eintrittsende 22 auf und eine Druckgasquelle 24, die im Bereich seines Eintrittsendes 22 angeschlossen ist. Die Druckgasquelle 24 kann entsprechend der Druckgasquelle 8, die mit Bezug auf Figur 1 und die erste Ausführungsform beschrieben ist, mittels eines Ventils gesteuert sein und beispielsweise CO₂, Stickstoff oder Luft zuführen. Bevorzugt ist das Rohrstück 20 auf einer gemeinsamen Achse mit der Presse 11 und der Leitung 12 angeordnet, um aus dem Auslass 3 austretenden stangenförmigen Feststoff 14 bei geöffnetem Verschluss 21 unbeschadet in das Rohrstück 20 zu transportieren. Dabei kann der Verschluss 21 einen Abschnitt stangenförmigen Feststoffs 14, der entlang des Auslasses 3 in das Rohrstück 20 transportiert wird, abtrennen. Durch die Druckgasquelle 24, die mit der Druckleitung 7, die hier kein Ventil aufweist, mit dem Rohrstück 20 verbunden ist, wird der stangenförmige Feststoff 14 aus dem Austrittsende 23 des Rohrstücks 20 gegen das Lebensmittel 5 auf dem Träger 4 beschleunigt.

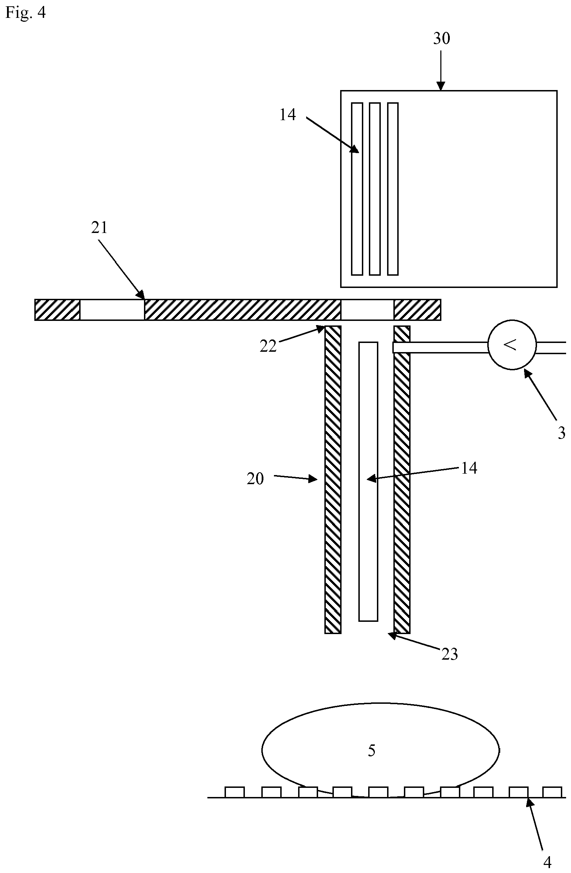

Figur 4 zeigt einen Vorratsbehälter 30, dessen Auslass bevorzugt fluchtend mit der Achse einer Transporteinrichtung ausgerichtet ist, die wie mit Bezug auf Figur 3 beschrieben ein Rohrstück 20 mit einem an einem Eintrittsende 22 angeordneten Verschluss 21 sein kann, wobei im Bereich des Eintrittsendes 22 eine gesteuerte Druckquelle 8 angeschlossen ist. In dieser schematischen Darstellung ist der stangenförmige Feststoff 14 im Vorratsbehälter kleiner dargestellt als im Rohrstück 20. Der Vorratsbehälter 30 kann zwischen einer Presse 11 mit daran angeschlossener Leitung 12 und einer Transporteinrichtung angeordnet sein. In dieser Ausführungsform kann stangenförmiger Feststoff 14 mittels Presse 11 und Leitung 12 aus den Lebensmittelzusatzstoffen erzeugt werden, im Vorratsbehälter 30 zwischengelagert werden und mittels der Transporteinrichtung, die das an eine Druckquelle 8 angeschlossene Rohrstück 20 umfasst, in das Lebensmittel 5 eingeführt werden.

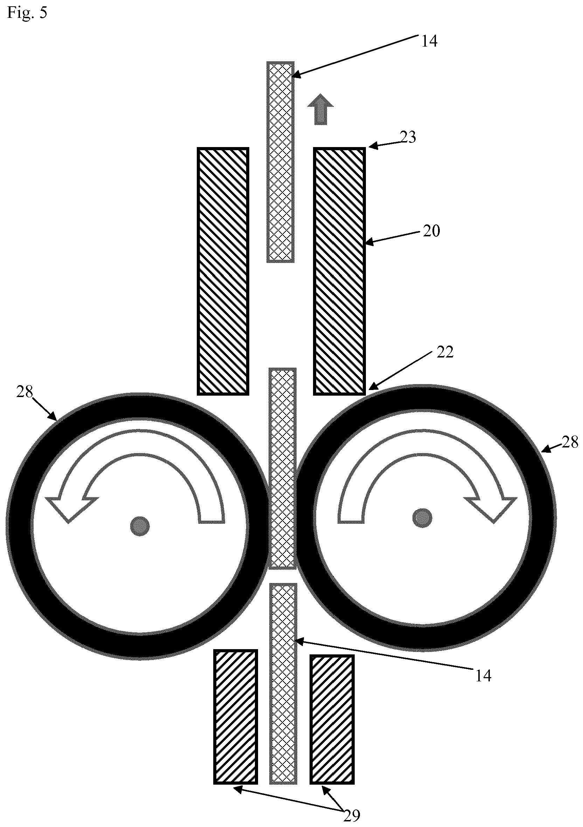

Figur 5 zeigt eine alternative Fördereinrichtung für stangenförmigen Feststoff 14, die ein Rohrstück 20 aufweist, an dessen Eintrittsende 22 zumindest zwei gegenläufig angetriebene Treibräder 28 angeordnet sind. Die Treibräder sind von der Längsmittelachse des Rohrstücks (20) beabstandet, so dass sie etwa gleich von der Längsmittelachse des Rohrstücks (20) beabstandet sind, um stangenförmigen Feststoff (14) zwischen sich zu führten und zu beschleunigen und in das Rohrstück (20) zu transportieren. Zur Zuführung des stangenförmigen Feststoffs 14 zwischen die Umfangsflächen der Treibräder kann ein Rohr 29 koaxial zum Rohrstück 20 und in einem Abstand zu den Treibrädern angeordnet sein. Optional sind die Umfangsflächen der Treibräder 28 elastisch, z.B. mit einer Gummischicht versehen. Die Umfangsflächen der Treibräder 28 können in einem Abstand angeordnet sein, der etwa dem Durchmesser des stangenförmigen Feststoffs 14 entspricht, so dass die Treibräder jeweils mit ihren Umfangsflächen den stangenförmigen Feststoff 14 durch das Rohrstück 20 beschleunigen. Die Treibräder 28 sind auf eine Umfangsgeschwindigkeit angetrieben, die etwa der gewünschten Geschwindigkeit des stangenförmigen Feststoffs 14 entspricht, z.B. eine Umfangsgeschwindigkeit von ca. 100 bis 200 km/h, z. B. 150 km/h.

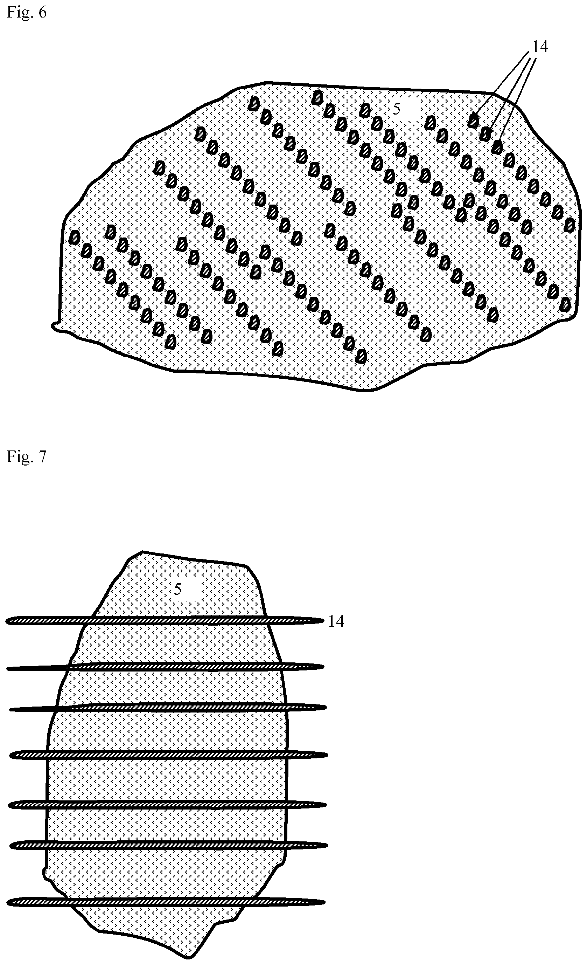

Die Figur 6 zeigt schematisch ein Lebensmittel, das mit einem erfindungsgemäßen Verfahren unter Verwendung der Vorrichtung hergestellt ist. Das Lebensmittel 5 weist Eintrittsöffnungen auf, in welchen der Feststoff 14 enthalten ist.

Die Figur 7 zeigt schematisch einen Querschnitt durch ein Lebensmittel 5, in das der Feststoff 14 aus Lebensmittelzusatzstoffen mit dem erfindungsgemäßen Verfahren eingebracht ist. Der dargestellte schematische Schnitt durch das Lebensmittel 5 zeigt, dass mit dem erfindungsgemäßen Verfahren in der zweiten Ausführungsform ein stangenförmiger Feststoff 14 durch das Volumen des Lebensmittels 5 eingetragen ist.

### Beispiel 1: Einbringen von Salz mittels Druckgas

Als Lebensmittelzusatzstoff wurde Speisesalz mittels einer Presse in Stangenform mit rundem Querschnitt, ca. 2,8 mm Durchmesser, ca. 5 bis 20 mm lang, gepresst und in ein Ende eines Rohrstücks (innen rund, 6 mm Innendurchmesser, 120 cm lang) eingeführt. Das Ende des Rohrstücks wurde verschlossen und mittels einer Stickstoffflasche (200 bar Druck) mit Druckgas beaufschlagt, das durch eine Leitung mit einem einfachen Schaltventil in dasselbe Ende geleitet wurde. Die gegenüberliegende Rohröffnung war in einem Abstand von 20 cm auf ballistische Gelatine einer Bloomzahl von 300 gerichtet. Das stangenförmige Salz drang in die Gelatine ein, abhängig von der Länge um ca. 5 bis 15 cm.

### Beispiel 2: Einbringen von Lebensmittelzusatzstoffen mittels Presse

Als Lebensmittelzusatzstoff wurde oberflächlich mit Wasser benetztes Speisesalz in Mischung mit 1 Gew.-% Gewürz, optional Glukose, mittels eines Extruders in Stangenform aus einer an den Extruder angeschlossenen Leitung gepresst, wie schematisch in Figur 2 gezeigt. Der stangenförmige Zusatzstoff wurde unmittelbar nach Austritt aus der Leitung in ballistische Gelatine (Bloomzahl 300) gedrückt, die in einem Abstand von 1 bis 10 cm von der Leitung angeordnet war. Der stangenförmige Zusatzstoff war zylindrisch und hatte abhängig vom endständigen Querschnitt der am Extruder angeschlossenen Leitung einen Durchmesser von 5 bis 15 mm.

**Bezugszeichenliste:**

| | |
|---|---|
| 1 Düse | 15 Heizeinrichtung |
| 2 Dosiereinrichtung | 16 Zuführstutzen |
| 3 Auslass | 18 Saugeinrichtung |
| 4 Träger | 20 Rohrstück |
| 5 Lebensmittel | 21 Verschluss |
| 6 Einlass | 22 Eintrittsende |
| 7 Druckleitung | 23 Austrittsende |
| 8 Druckquelle | 25 Steuereinrichtung |
| 9 Ventil | 26 Antrieb der Dosiereinrichtung |
| 10 Antrieb | 27 Antrieb des Trägers |
| 11 Presse | 28 Treibrad |
| 12 Leitung | 29 Rohr |
| 13 Einlass | 30 Vorratsbehälter |
| 14 Feststoff | |

## Patentansprüche

1. Verfahren zur Herstellung von Lebensmitteln mit dem Schritt des Einbringens zumindest eines Lebensmittelzusatzstoffs in ein Lebensmittel (5) mittels einer Fördereinrichtung und einem relativ zu der Fördereinrichtung beweglichen Träger (4), in dessen angrenzendem Bereich das Lebensmittel (5) angeordnet wird, **dadurch gekennzeichnet, dass** der Lebensmittelzusatzstoff in Form eines stangenförmigen Feststoffs (14) mit einem Durchmesser von 0,2 bis 25 mm und mit einer Länge, die größer als der Durchmesser ist, vorliegt und der stangenförmige Feststoff (14) kontinuierlich oder stoßweise gegen das Lebensmittel (5) bis mindestens zu einer Geschwindigkeit beschleunigt wird, die für das Eindringen in das Lebensmittel bis zu einer Eindringtiefe von 0,5 bis 5 cm ausreicht, wobei der stangenförmige Feststoff mittels einer Presse (11), an die eine Leitung (12) angeschlossen ist, aus Lebensmittelzusatzstoff geformt wird und angetrieben durch den Druck der Presse (11) nach Austritt aus der Leitung (12) in das Lebensmittel geschoben wird oder der stangenförmige Feststoff (14) in ein Rohrstück (20) eingebracht wird, dessen Innenquerschnitt den Feststoff (14) passend umfasst und der stangenförmige Feststoff (14) mittels eines Druckgases, einer Treibladung oder eines Kolbens aus dem Rohrstück (20) oder mittels gegenläufig angetriebener, beabstandeter Treibräder (28) durch das Rohrstück (20) und gegen das Lebensmittel (5) beschleunigt wird.

2. Verfahren nach Anspruch 1, **dadurch gekennzeichnet, dass** der Feststoff (14) durch Agglomerieren und/oder Pressen und/oder Frieren des Lebensmittelzusatzstoffs erzeugt ist.

3. Verfahren nach einem der voranstehenden Ansprüche, **dadurch gekennzeichnet, dass** der Lebensmittelzusatzstoff dadurch zu stangenförmigem Feststoff (14) gepresst wird, dass der Lebensmittelzusatzstoff mit einer Masse Lösungswasser und/oder Lösungsmittel versetzt und einer Presse (11) mit einer angeschlossenen Leitung (12) zugeführt wird, von denen zumindest eine einen Dampfaustritt aufweist, durch den Lösungswasser und/oder Lösungsmittel in Dampfform abgeführt wird.

4. Verfahren nach einem der Ansprüche 1 bis 3, **dadurch gekennzeichnet, dass** der Lebensmittelzusatzstoff zumindest zu 90 Gew.-% Salz aufweist und dadurch zu stangenförmigem Feststoff (14) gepresst ist, dass Lebensmittelzusatzstoffe ohne Lösungswasser einer Presse (11) zugeführt werden, die eine angeschlossene Leitung (12) zum Austritt des stangenförmigen Feststoffs (14) aufweist.

5. Verfahren nach einem der Ansprüche 1 bis 4, **dadurch gekennzeichnet, dass** zwischen dem stangenförmigen Feststoff und dem Rohrstück (20) ein Gleitmittel angeordnet wird.

6. Verfahren nach einem der voranstehenden Ansprüche, **dadurch gekennzeichnet, dass** das Lebensmittel (5) Warmfleisch und/oder ein Schinkenstück ist.

7. Verwendung einer Vorrichtung zum Einbringen von Lebensmittelzusatzstoffen in einem Verfahren gemäß einem der voranstehenden Ansprüche in feste Lebensmittel (5), mit einem Träger (4) zur Anordnung von Lebensmitteln (5) in einem an den Träger (4) angrenzenden Bereich, **gekennzeichnet durch** eine Presse (11) mit einer angeschlossenen Leitung (12), die eingerichtet ist, die Lebensmittelzusatzstoffe zu stangenförmigem Feststoff (14) mit einem Durchmesser von 0,2 bis 25 mm und mit einer Länge, die größer als der Durchmesser ist, zu formen, wobei die Presse (11) zur Beschleunigung des stangenförmigen Feststoffs (14) bis mindestens zu einer Geschwindigkeit, die für das Eindringen in das Lebensmittel bis zu einer Eindringtiefe von 0,5 bis 5 cm ausreicht, an der Leitung (12) einen Auslass (3) aufweist, der auf den an den Träger (4) angrenzenden Bereich ausgerichtet ist.

8. Verwendung nach Anspruch 7, **dadurch gekennzeichnet, dass** die Presse (11) und/oder die Leitung (12) zumindest einen Dampfaustritt aufweist, aus dem Lösungswasser in Form von Dampf austreten kann.

9. Verwendung nach einem der Ansprüche 7 bis 8, **dadurch gekennzeichnet, dass** die Presse (11) eine mit ihrem Innenvolumen verbundene Heizeinrichtung (15) aufweist.

10. Verwendung nach einem der Ansprüche 7 bis 9, **dadurch gekennzeichnet, dass** die Presse (11) eine Heizeinrichtung (15) für zumindest einen Teil der Lebensmittelzusatzstoffe aufweist, die auf eine Temperatur beheizbar ist, bei der zumindest ein Teil der Lebensmittelzusatzstoffe fließfähig wird bzw. schmilzt, und der Auslass (3) der Presse (11) mit einem Einlass (6) eines Rohrstücks (20) verbunden ist.

11. Verwendung nach einem der Ansprüche 7 bis 10, **dadurch gekennzeichnet, dass** im Anschluss an die Presse (11) ein Rohrstück (20) mit einer Eintrittsöffnung an seinem Eintrittsende (22) und einer auf den an den Träger (4) angrenzenden Bereich ausgerichteten Austrittsöffnung (23) angeordnet ist, das einen in dem Rohrstück (20) geführten Kolben aufweist, oder eine Druckquelle (8) an das Rohrstück (20) im Bereich von dessen Eintrittsende (22) angeschlossen ist, oder zumindest zwei von der Längsmittelachse des Rohrstücks (20) beabstandete angetriebene Treibräder (28) in einem Abstand zu dem Rohrstück (20) angeordnet sind.

12. Verwendung nach einem der Ansprüche 7 bis 11, **dadurch gekennzeichnet, dass** das Rohrstück (20) eine Zuführeinrichtung für ein Gleitmittel aufweist, die das Gleitmittel in das Rohrstück (20) einbringt und/oder auf den stangenförmigen Feststoff aufbringt.

13. Verwendung nach einem der Ansprüche 7 bis 12, **gekennzeichnet durch** eine Einrichtung zum Frieren der Lebensmittelzusatzstoffe zu dem stangenförmigen Feststoff (14), die ausgewählt ist unter einer Presse (11) mit daran angrenzender gekühlter Leitung (12), einer Dragiertrommel mit Kühlung und einer gekühlten ruhenden Form.

## Claims

1. Process for the production of foods including the step of introducing at least one food additive into a food (5) using a conveying device and a carrier (4) that is movable relative to the conveying device, in the adjacent area of which the food (5) is arranged, **characterized in that** the food additive is present in the form of a rod-shaped solid (14) having a diameter of 0.2 to 25 mm and a length that is greater than the diameter and wherein the rod-shaped solid (14) is accelerated continuously or fitfully against the food (5) up to a speed sufficient for penetration into the food up to a penetration depth of 0.5 to 5 cm, wherein the rod-shaped solid is formed from food additive by means of a press (11) connected to a line (12) and is pushed into the food by the pressure of the press (11) after exiting the line (12), or wherein the rod-shaped solid (14) is introduced into a pipe section (20), the inner cross-section of which fittingly encompasses the solid (14) and the rod-shaped solid (14) is accelerated out of the pipe section (20) and against the food (5) by means of a compressed gas, a propellant charge, or a piston, or accelerated through the pipe section (20) and against the food (5) by means of counter-directionally driven, spaced-apart traction wheels (28).

2. Process according to claim 1, **characterized in that** the solid (14) is generated by agglomerating and/or pressing and/or freezing the food additive.

3. Process according to one of the preceding claims, **characterized in that** the food additive is pressed into rod-shaped solid (14) by mixing the food additive with a mass of solution water and/or solvent and introducing it into a press (11) connected to a line (12), of which at least one has a steam exit, through which solution water and/or solvent is removed in the form of steam.

4. Process according to one of claims 1 to 3, **characterized in that** the food additive contains at least 90 wt-% salt and is pressed into rod-shaped solid (14) by means of introducing food additives without solution water into a press (11) having a connected line (12) for exiting of the rod-shaped solid (14).

5. Process according to one of claims 1 to 4, **characterized in that** a lubricant is arranged between the rod-shaped solid and the pipe section (20).

6. Process according to one of the preceding claims, **characterized in that** the food (5) is warm meat and/or a piece of ham.

7. Use of a device for introducing food additives into solid foods (5) in a process according to one of the preceding claims, comprising a carrier (4) to arrange foods (5) in an area adjacent to the carrier (4), **characterized by** a press (11) connected to a line (12) that is arranged to form the food additives into a rod-shaped solid (14) having a diameter of 0.2 to 25 mm and a length greater than the diameter, wherein the press (11), in order to accelerate the rod-shaped solid (14) at least up to a speed sufficient for penetration into the food up to a depth of 0.5 to 5 cm, on the line (12) has an outlet (3) that is oriented toward the area adjacent to the carrier (4).

8. Use according to claim 7, **characterized in that** the press (11) and/or the line (12) has at least one steam outlet, out of which solution water may exit in the form of steam.

9. Use according to one of claims 7 to 8, **characterized in that** the press (11) has a heating device (15) that is connected to the interior volume of the press (11).

10. Use according to one of claims 7 to 9, **characterized in that** the press (11) has a heating device (15) for at least a part of the food additives that is heatable up to a temperature sufficient for making flowable or melting at least a part of the food additives, and the outlet (3) of the press (11) is connected to an inlet (6) of a pipe section (20).

11. Use according to one of claims 7 to 10, **characterized in that** connected to the press (11) there is arranged a pipe section (20) featuring an inlet opening at its inlet end (22) and an outlet opening (23) that is oriented towards the area adjacent to the carrier (4), having a piston guided within the pipe section (20), or a pressure source (8) connected to the pipe section (20) in the area of its inlet end (22), or at least two driven traction wheels (28) that are spaced from the longitudinal central axis of the pipe section (20) that are arranged at a distance to the pipe section (20).

12. Use according to one of claims 7 to 11, **characterized in that** the pipe section (20) has a lubricant supplying device that introduces the lubricant into the pipe section (20) and/or coats lubricant onto the rod-shaped solid.

13. Use according to one of claims 7 to 12, **characterized by** a device for freezing of the food additives into the rod-shaped solid (14), which device is selected from a press (11) with an adjacent cooled line (12), a dragée making barrel with cooling and a cooled resting mold.

## Revendications

1. Procédé pour la production de denrées alimentaires avec l'étape d'introduction d'au moins un additif alimentaire dans une denrée alimentaire (5) au moyen d'un dispositif de transport et d'un support (4) mobile par rapport au dispositif de transport et dans la zone adjacente duquel la denrée alimentaire (5) est disposée, **caractérisé en ce que** l'additif alimentaire se présente sous la forme d'une substance solide en forme de tige (14) ayant un diamètre de 0,2 à 25 mm et une longueur supérieure au diamètre, et la substance solide en forme de tige (14) est accélérée en continu ou par intermittence à l'encontre de la denrée alimentaire (5) à au moins une vitesse suffisante pour pénétrer dans la denrée alimentaire à une profondeur de pénétration de 0,5 à 5 cm, le matériau solide en forme de tige étant formé à partir d'un additif alimentaire au moyen d'une presse (11), à laquelle une ligne (12) est reliée, et étant poussé dans la denrée alimentaire entraîné par la pression de la presse (11) après avoir quitté la ligne (12) ou le matériau solide en forme de tige (14) étant introduit dans une section tubulaire (20), dont la section transversale interne comprend comme il se doit le solide (14), et le solide (14) en forme de tige est accéléré au moyen d'un gaz comprimé, d'une charge propulsive ou d'un piston sortant de la pièce tubulaire (20) ou au moyen de roues propulsives (28) entraînées en sens inverse et espacées, à travers la pièce tubulaire (20) et à l'encontre de la denrée alimentaire (5).

2. Procédé selon la revendication 1, **caractérisé en ce que** le solide (14) est produit par agglomération et/ou pressage et/ou congélation de l'additif alimentaire.

3. Procédé selon l'une des revendications précédentes, **caractérisé en ce que** l'additif alimentaire est pressé dans un matériau solide en forme de tige (14) en ajoutant une masse d'eau de solution et/ou de solvant à l'additif alimentaire et en l'introduisant dans une presse (11) avec une ligue connectée (12), dont au moins une présente une sortie de vapeur par laquelle l'eau de solution et/ou le solvant sont évacués sous forme de vapeur.

4. Procédé selon l'une des revendications 1 à 3, **caractérisé en ce que** l'additif alimentaire contient au moins 90 % en poids de sel et est ainsi pressé dans un matériau solide en forme de tige (14), **en ce que** des additifs alimentaires sont amenés sans eau de solution à une presse (11) qui présente une ligue (12) reliée pour assurer la sortie du matériau solide en forme de tige (14).

5. Procédé selon l'une quelconque des revendications 1 à 4, **caractérisé en ce qu'**un lubrifiant est disposé entre le solide en forme de tige et la pièce tubulaire (20).

6. Procédé selon l'une des revendications précédentes, **caractérisé en ce que** la denrée alimentaires (5) est de la viande cuite et/ou un morceau de jambon.

7. Utilisation d'un dispositif pour introduire des additifs alimentaires dans un procédé selon l'une des revendications précédentes dans la denrée alimentaires solides (5), comprenant un support (4) pour disposer la denrée alimentaires (5) dans une zone adjacente au support (4), **caractérisée par** une presse (11) ayant un ligue relié (12) conçu pour transformer les additifs alimentaires en matériau solide (14) sous la forme de tige ayant un diamètre de 2 à 25 mm et ayant une longueur supérieure au diamètre, la presse (11) présentant sur le conduit (12) une sortie (3) orientée vers la zone adjacente au support (4) pour accélérer le solide en forme de tige (14) à au moins une vitesse suffisante pour pénétrer dans les denrée alimentaires à une profondeur de pénétration de 0,5 à 5 cm.

8. Utilisation selon la revendication 7, **caractérisée en ce que** la presse (11) et/ou le conduit (12) présente au moins une sortie de vapeur par laquelle l'eau de solution sous forme de vapeur peut s'échapper.

9. Utilisation selon l'une quelconque des revendications 7 ou 8, **caractérisée en ce que** la presse (11) comprend un dispositif de chauffage (15) relié à son volume interne.

10. Utilisation selon l'une quelconque des revendications 7 à 9, **caractérisée en ce que** la presse (11) comprend un moyen de chauffage (15) pour au moins une partie des additifs alimentaires, qui peuvent être chauffés à une température à laquelle au moins une part des additifs alimentaires deviennent fluides ou fondent, et la sortie (3) de la presse (11) est reliée à une entrée (6) d'un tronçon de tube (20).

11. Utilisation selon l'une des revendications 7 à 10, **caractérisée en ce que**, après la presse (11), un tronçon de tube (20) est disposé avec une ouverture d'entrée à son extrémité d'entrée (22) et une ouverture de sortie (23) alignée sur la zone adjacente au support (4), qui présente un piston guidé dans le tronçon de tube (20), ou une source de pression (8) est reliée an du tronçon de tube (20) dans la zone de son extrémité d'entrée (22), ou au moins deux roues motrices (28) qui sont espacées de l'axe central longitudinal de la section de tube (20) sont disposées à une certaine distance du tronçon de tube (20).

12. Utilisation selon l'une quelconque des revendications 7 à 11, **caractérisée en ce que** le tronçon de tube (20) comprend un moyen d'alimentation en lubrifiant qui introduit le lubrifiant dans la pièce tubulaire (20) et/ou l'applique sur le solide en forme de tige.

13. Utilisation selon l'une quelconque des revendications 7 à 12, **caractérisée par** un dispositif permettant de congeler les additifs alimentaires au solide en forme de tige (14), dispositif choisi parmi une presse (11) avec un conduit refroidi adjacent (12), un tambour de revêtement avec refroidissement et un moule fixe refroidi.
